# FASCICULE DE BREVET EUROPEEN

(11) **EP 3 851 725 B1**
(45) Date de publication et mention de la délivrance du brevet: **19.10.2022**
(21) Numéro de dépôt: 21150734.8
(22) Date de dépôt: 08.01.2021
(51) Int. Cl.: F16L 41/06, B25B 5/12, B25B 5/14, B25B 5/16, F16L 3/10

(54) **COLLIER COMPRENANT UN SYSTÈME DE RÉGLAGE DE DIAMÈTRE CONFIGURÉ POUR AUTORISER UN CHANGEMENT DE DIAMÈTRE DU COLLIER**
SCHELLE MIT EINEM DURCHMESSERVERSTELLSYSTEM DERART EINGERICHTET, UM EINE ÄNDERUNG IM DURCHMESSER DER SCHELLE ZU ERLAUBEN
CLAMP COMPRISING A DIAMETER ADJUSTMENT SYSTEM CONFIGURED FOR ALLOWING A CHANGE IN DIAMETER OF THE CLAMP

(30) Priorité: 14.01.2020 FR 2000333
(43) Date de publication de la demande: 21.07.2021
(73) Titulaire: Etablissements Saint Germain Et Straub, 80210 Feuquieres-en-Vimeu (FR)
(72) Inventeur: HELLE, Jacky, 80130 FRIVILLE ESCARBOTIN (FR)
(74) Mandataire: Bureau Duthoit Legros Associés

(56) Documents cités:
- CH-A5- 683 204
- DE-A1- 19 930 367

## Description

La présente divulgation est relative à un collier destiné à ceinturer une canalisation de fluide, eau ou gaz par exemple et plus particulièrement un collier de dérivation.

### Domaine technique

La présente divulgation relève du transport de fluide, et plus particulièrement celui de l'adduction d'eau pour lequel il est connu de créer une dérivation à partir d'une conduite d'eau, par exemple pour la création de l'alimentation en eau de nouvelles habitations. Il existe ainsi des colliers de dérivation qui comprennent traditionnellement une selle équipée d'un robinet et d'une bride (souple ou rigide). Classiquement, ce type de collier est monté sur une conduite d'eau en charge (ou non), la bride souple étant déformée pour ceinturer la canalisation, la selle étant en appui sur une paroi extérieure de la canalisation. La dérivation est ainsi créée en perçant la canalisation au travers de la tubulure du collier.

### Technique antérieure

De tels colliers de dérivation sont connus de l'état de la technique et sont traditionnellement constitués d'une selle rigide destinée à être appliquée de manière étanche, via un joint sur la canalisation, en regard d'un orifice de piquage, et d'une bride souple (ou bracelet) pour le serrage de la selle sur la canalisation. De manière connue, la bride, constituée généralement à partir d'un feuillard métallique est souple et est assujettie à la selle, pièce rigide, de fonderie notamment, voire de décolletage, par l'intermédiaire de moyens de fixation latéraux à ladite selle. Ces moyens de fixation comportent des moyens de vissage pour serrer le collier, à savoir l'ensemble bride/selle sur la canalisation. De tels colliers sont, par exemple, connus des documents FR 2.809.471, WO 99/32823 ou encore FR 2.933.764.

Selon un premier défaut répandu de tels collier de dérivation, et préalablement au serrage du collier par vissage, il est nécessaire de dissocier les deux pièces à visser (par exemple la vis et l'écrou), l'une des deux pièces alors désolidarisée pouvant alors échapper des mains de l'opérateur, avec risque de chute et de perte.

Selon les constatations des inventeurs, un deuxième défaut inhérent à ces collier de dérivation est leur temps de pose pour assurer le serrage par vissage, ou encore l'ajustement de la longueur du collier. Là encore et dans les colliers de l'état de la technique connu, le réglage du diamètre du collier nécessite par exemple de retirer la vis de serrage d'une ouverture de réglage de la bande métallique pour l'insérer dans une autre ouverture de réglage, correspondant au diamètre souhaité, avec risque de perte de composants.

Il existe encore de l'état de la technique, par exemple du document FR 2.938.04 un collier composé essentiellement de deux sections de collier, rigides, amovible d'une par rapport à l'autre. Deux extrémités en regards des deux sections rigides présentent des conformations à fonction de crochet permettant leur accrochement mutuelle, en deux positions de réglage pour permettre l'ajustement du diamètre du collier. Les deux autres extrémités en regard des deux sections rigides fermeture sont reliées par un système de serrage à vis (i.e un boulon), qui permet d'assurer le serrage du collier et la compression du joint sur la canalisation.

Là encore, et lors de la pose, il est nécessaire de séparer les deux sections de collier, pour changer de position d'accrochage, lors de la mise en œuvre d'un réglage de diamètre, aux deux premières extrémités des deux sections rigides, mais encore de séparer l'écrou de la vis, pour assurer l'assemblage aux deux autres extrémités des deux sections rigides, avec donc un risque important de perte des composants pour ces deux opérations qui sont bien souvent opérées par un opérateur en conditions difficiles.

Un collier de serrage est connu du document CH 683204. Le collier de serrage est un anneau en deux parties, dont une partie de base formant une moitié de l'anneau porte un moyen de fixation fixe pour monter un tuyau à enfermer par le collier de serrage à une distance d'un mur ou d'un plafond. Une partie annulaire flexible, qui est articulée à l'extrémité de la partie de base, est un arc en fil métallique avec deux extrémités en forme de boucle et avec des coudes en fil métallique entre elles dans les deux longueurs de fil.

### Résumé

La présente divulgation vient améliorer la situation, en permettant d'assurer un réglage de la dimension du collier, permettant son adaptation à un diamètre de canalisation sans risque de perte de ses composants.

Un autre objectif de la présente divulgation, au moins selon un mode de réalisation est de proposer un collier qui, pour le serrage du collier, et notamment la compression d'un joint du collier de dérivation évite la perte de ses composants.

D'autres buts et avantages apparaîtront au cours de la description qui va suivre qui n'est donnée qu'à titre indicatif et qui n'a pas pour but de la limiter.

A cet effet la présente divulgation concerne tout d'abord un collier pour canalisation comprenant :
- une première section de collier comprenant un corps rigide, s'étendant suivant une portion de cercle destiné à prendre appui sur une première portion de la périphérie d'une canalisation, ladite première section de collier comprenant une première extrémité et une deuxième extrémité,
- une deuxième section de collier, comprenant un corps rigide , s'étendant suivant une portion de cercle destiné à prendre appui sur une deuxième portion de la périphérie de ladite canalisation, diamétralement opposée à ladite première portion, ladite deuxième section de collier comprenant une première extrémité et une deuxième extrémité,
- des moyens d'articulation reliant la première extrémité de la première section de collier et la première extrémité de la deuxième section de collier comprennent un axe d'articulation monté pivotant dans au moins une ouverture, ledit axe d'articulation étant solidaire de la première extrémité de la première section de collier et ladite au moins une ouverture solidaire de la première extrémité de la deuxième section de collier, ou inversement ledit axe d'articulation étant solidaire de la première extrémité de la deuxième section de collier et ladite au moins une ouverture solidaire de la première extrémité de la première section de collier,
- des moyens de liaison et de serrage, configurés amovibles de sorte à permettre de passer d'une position escamotée jusqu'à une position de liaison reliant la deuxième extrémité de la première section de collier à la deuxième extrémité de la deuxième section de collier pour assurer le serrage du collier sur la canalisation, ladite position escamotée assurant l'ouverture du collier par écartement de la première section de collier et de la deuxième section de collier en liaison par lesdits moyens d'articulation, puis, l'insertion d'une canalisation par un dégagement du collier laissé par l'escamotage desdits moyens de liaison, amovible et l'écartement de la première section de collier et de la deuxième section de collier par le pivotement des moyens d'articulation, et dans lequel le collier comprend un système de réglage de diamètre configuré pour autoriser un changement de diamètre du collier, sans séparation de la première section de collier et de la deuxième section de collier toujours liées par lesdits moyens d'articulation, ledit système de réglage comprenant ledit axe d'articulation qui comprend au moins un ergot de section non circulaire, ladite au moins une ouverture comprenant un couple d'ouvertures de réglage autorisant deux positions de réglage distinctes pour l'axe d'articulation dont ledit ergot de section circulaire est prisonnier dans l'une ou l'autre des deux ouvertures de réglage en position de fermeture du collier, et dans lequel une gorge, de largeur inférieure au diamètre des ouvertures de réglage met en communication les deux ouvertures du couple d'ouverture de réglage, en autorisant lors de l'ouverture du collier par pivotement dudit axe d'articulation par rapport à l'une ou l'autre des deux ouvertures de réglage; le pivotement dudit ergot de section non circulaire jusqu'à une position autorisant l'engagement dudit ergot de section non circulaire au travers de la gorge, et ainsi le changement de position de l'axe d'articulation de l'une à l'autre des deux ouvertures du couple d'ouvertures de réglage par coulissement dudit au moins un ergot de section non circulaire au travers de la gorge.

Selon un mode de réalisation, ledit axe d'articulation comprend deux dits ergots, coaxiaux, orientés suivant des sens opposés, solidaires de la première extrémité de la première section de collier; ou inversement de la première extrémité de la deuxième extrémité de collier, et dans lequel le système de réglage de diamètre configuré pour autoriser un changement de diamètre du collier comprend, deux couples d'ouvertures de réglage, ainsi que la gorge mettant en communication les deux ouvertures de réglage de chaque couple, les ergots étant reçus simultanément respectivement dans deux des ouvertures de réglage des deux couples d'ouverture de réglage, ou encore dans les deux gorges, intermédiaires entre les deux ouverture des couples d'ouverture de réglage.

Selon un mode de réalisation, les ergots sont orientés vers l'extérieur, de manière coaxiale, en saillie de la première extrémité de la première section de collier, ou inversement de la première extrémité de la deuxième section de collier, et dans lequel les deux couples d'ouvertures, ainsi que les deux gorges sont orientés débouchantes, les unes vers les autres, pratiqués respectivement sur deux branches parallèles de la première extrémité de la deuxième section de collier, ou inversement sur deux branches de la première extrémité de la première section de collier.

Selon un mode de réalisation, l'une des deux ouvertures du ou de chaque couple d'ouvertures de réglage comprend une rainure d'entrée, mettant en communication ladite ouverture de réglage à l'extérieur en autorisant lors de l'ouverture du collier par pivotement dudit axe d'articulation par rapport à ladite ouverture de réglage, le pivotement dudit ergot de section non circulaire jusqu'à une position autorisant l'engagement dudit ergot de section non circulaire dans la rainure d'entrée, et ainsi l'extraction dudit ergot de section non circulaire par coulissement de l'ergot de section non circulaire le long de la rainure d'entrée jusqu'à l'extérieur, jusqu'à obtenir la séparation entre la première section et la deuxième section, ou au contraire permettre l'assemblage de la première section de collier à la deuxième section de collier par insertion dudit ergot de section non circulaire dans la rainure d'entrée et jusqu'à son insertion dans l'ouverture de réglage.

Selon un mode de réalisation, les moyens de liaison, comprennent un dispositif de serrage mécanique à grenouillère comprenant un levier articulé suivant un premier axe de pivot à la deuxième extrémité de la deuxième section de collier, ou inversement à la deuxième extrémité de la première section de collier, ainsi qu'une boucle , articulée audit levier suivant un second axe de pivot configurée pour accrocher de manière amovible au moins un crochet solidaire de la deuxième extrémité de la première section de collier, ou inversement de la deuxième extrémité de la deuxième section de collier, et dans lequel ledit dispositif de serrage mécanique est configuré pour se bloquer lorsque le second axe de pivot passe le point d'alignement entre le premier axe de pivot et le troisième axe de pivot, et jusqu'à la mise une mise en butée du levier.

Selon un mode de réalisation, le levier et la boucle du dispositif de serrage sont constitués essentiellement, respectivement par deux fils métalliques conformés, par exemple
- le levier comprend un fil métallique conformé dont les deux extrémités, notamment recourbées l'une vers l'autre, sont insérées respectivement dans deux ouvertures de la deuxième extrémité de la seconde section de collier, ou de la première section de collier pour constituer le premier axe de pivot, et/ou
- la boucle comprend un fil métallique conformé dont les deux extrémités sont articulées au levier, à titre d'exemple recourbées l'une vers l'autre, insérées respectivement dans deux ouvertures formées par des œillets formés par le fil métallique du levier.

Selon un mode de réalisation, le collier est à fonction de collier de dérivation, le corps rigide de la première section de collier présentant une ouverture de passage pour une tubulure destinée à positionner au droit d'une ouverture de piquage de la canalisation, un joint maintenu contre la canalisation assurant l'étanchéité au niveau de l'ouverture de piquage, lesdits moyens de liaison et de serrage, amovibles étant configurés de sorte dans que la position de liaison reliant la deuxième extrémité de la première section de collier à la deuxième extrémité de la deuxième section de collier entraîne le serrage du joint et son étanchéité sur la canalisation.

Selon un mode de réalisation, ledit au moins ergot d'une part, et ledit couple d'ouvertures de réglage et la gorge, d'autre part, sont réalisés respectivement d'un seul tenant avec le corps rigide de la première section de collier, et d'un seul tenant avec le corps rigide de la deuxième section de collier.

Selon un mode de réalisation, le corps rigide de la première section de collier, est une pièce de fonderie ou encore un pièce plastique moulée, et le corps rigide de la deuxième section de collier, est une pièce de fonderie ou encore une pièce plastique moulée, et dans lequel ledit au moins un ergot et/ou le couple d'ouverture de réglage ainsi la gorge sont obtenus lors du moulage des pièces de fonderie, éventuellement avec reprise d'usinage, ou encore obtenus lors du moulage des pièces plastiques.

### Brève description des dessins.

D'autres caractéristiques, détails et avantages apparaîtront à la lecture de la description détaillée ci-après, et à l'analyse des dessins annexés, sur lesquels :
**Fig. 1**

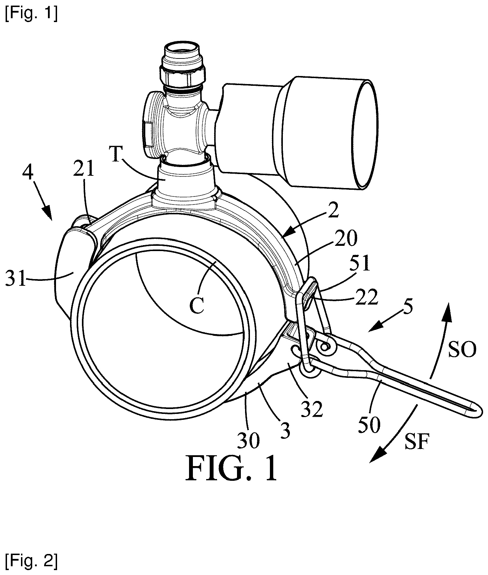

   [Fig. 1] montre en perspective un collier conforme à la présente divulgation monté sur une canalisation, les ergots du système de réglage prisonniers des ouvertures de réglage des deux couples d'ouverture de réglage configurées pour assurer le montage du collier sur une canalisation de moindre diamètre.
**Fig. 2**

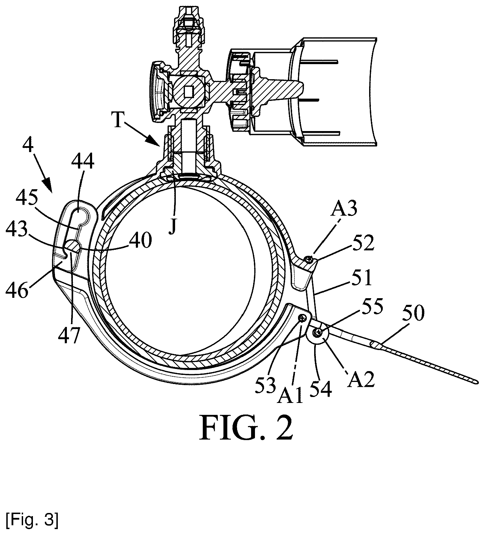

   [Fig. 2] est une vue de coupe du collier de la figure 1, selon le plan de collier, illustrant plus particulièrement les deux ouvertures de réglage du couple d'ouverture de réglage, ainsi que la gorge, intermédiaire, configurée pour assurer le changement de position de chaque ergot de section non circulaire de l'une vers l'autre des deux ouvertures de réglage, chaque ergot de section non circulaire positionné dans l'ouverture de réglage du couple configurée pour le montage du collier sur une canalisation de moindre diamètre.
**Fig. 3**

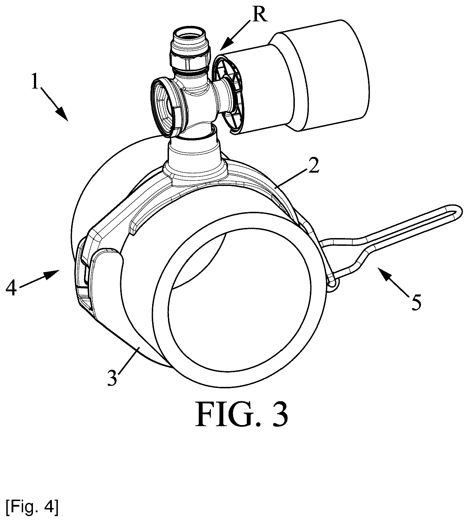

   [Fig. 3] montre en perspective le collier de la figure 1 monté sur une canalisation, les ergots du système de réglage prisonniers des ouvertures de réglage des deux couples d'ouvertures de réglage configurées pour assurer le montage du collier sur une canalisation de plus grand diamètre.
**Fig. 4**

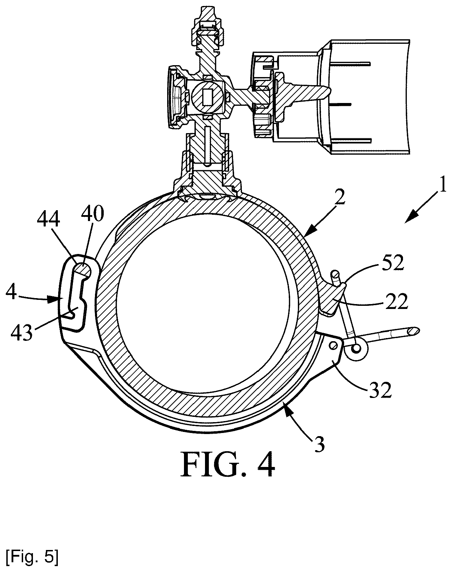

   [Fig. 4] une vue de coupe du collier de la figure 3, selon le plan de collier, illustrant plus particulièrement les deux ouvertures de réglage du couple d'ouverture de réglage, ainsi que la gorge, intermédiaire, configurée pour assurer le changement de position de chaque ergot de section non circulaire de l'une vers l'autre des deux ouvertures de réglage, ledit ergot de section non circulaire positionné dans l'ouverture de réglage du couple, configurée pour le montage du collier sur une canalisation de plus grand diamètre.
**Fig. 5**

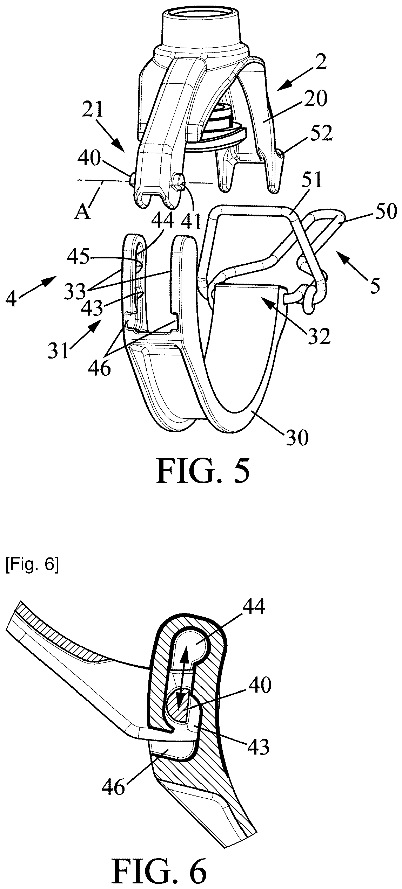

   [Fig. 5] est une vue de détail, partielle du collier de la figure 1, la première section de collier et la deuxième section de collier étant désassemblés par retrait des ergots de section non circulaire le long des rainures d'entrée.
**Fig. 6**
   [Fig. 6] est une vue schématique illustrant le changement de position de l'ergot de section non circulaire par coulissement dudit ergot le long de la gorge.
**Fig. 7a**

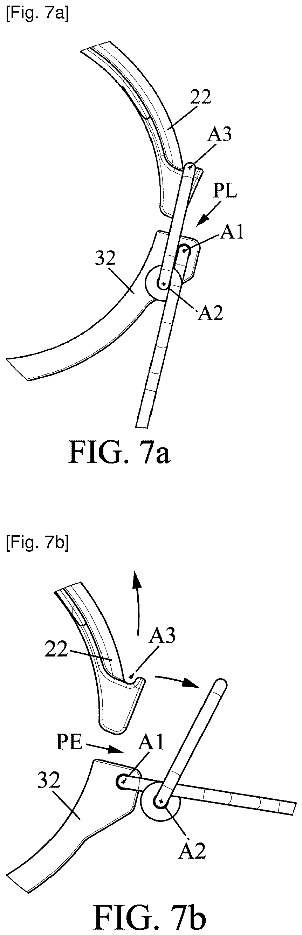

   [Fig. 7a] est une vue schématique du dispositif de serrage du type à grenouillère dans sa position de serrage et de blocage.
**Fig. 7b**
   [Fig. 7b] est une vue schématique du dispositif de serrage du type à grenouillère dans sa position desserrée.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aussi l'invention est relative à un collier 1 pour canalisation comprenant :
- une première section de collier 2 comprenant un corps rigide 20, s'étendant suivant une portion de cercle destinée à prendre appui sur une première portion de la périphérie d'une canalisation C, ladite première section de collier 2 comprenant une première extrémité 21 et une deuxième extrémité 22,
- une deuxième section de collier 3, comprenant un corps rigide 30, s'étendant suivant une portion de cercle destinée à prendre appui sur une deuxième portion de la périphérie de ladite canalisation C, diamétralement opposée à ladite première portion, ladite deuxième section de collier 3 comprenant une première extrémité 31 et une deuxième extrémité 32,
- des moyens d'articulation 4 reliant la première extrémité 21 de la première section de collier 2 et la première extrémité 31 de la deuxième section de collier 3 comprennent un axe d'articulation A monté pivotant dans au moins une ouverture, ledit axe d'articulation étant solidaire de la première extrémité de la première section de collier 2 et ladite au moins une ouverture solidaire de la première extrémité de la deuxième section de collier, ou inversement ledit axe d'articulation étant solidaire de la première extrémité de la deuxième section de collier et ladite au moins une ouverture solidaire de la première extrémité de la première section de collier,
- des moyens de liaison et de serrage 5, configurés amovibles de sorte à permettre de passer d'une position escamotée PE jusqu'à une position de liaison PL reliant la deuxième extrémité 22 de la première section de collier 3 à la deuxième extrémité 32 de la deuxième section de collier 3 configurée pour assurer le serrage du collier sur la canalisation.

La position escamotée PE des moyens de liaison et de serrage 5 assure :
- l'ouverture du collier par écartement de la première section de collier 2 et de la deuxième section de collier en liaison par lesdits moyens d'articulation 4, puis,
- l'insertion d'une canalisation C au travers du dégagement du collier laissé par l'escamotage desdits moyens de liaison 5, amovible et l'écartement de la première section de collier 2 et de la deuxième section de collier 3 par le pivotement des moyens d'articulation 4.

Ainsi, et dans la position escamotée PE des moyens de liaison 5, telle qu'illustrée à titre indicatif à la figure 7b, la deuxième extrémité 22 de la première section 2 du collier et la deuxième extrémité 32 de la première section de collier ne sont plus liées, et l'opérateur peut ouvrir le collier en pivotant la première section 2 de collier par rapport à la deuxième section 3 du collier autour de l'axe d'articulation A des moyens d'articulation 4. Cette ouverture s'opère jusqu'à une position où le dégagement entre la deuxième extrémité 22 de la première section 2, d'une part, et la deuxième extrémité 32 de la deuxième section 3, d'autre part, est suffisant. Dans cette position, la distance entre les deux extrémités est au moins égale au diamètre externe de la canalisation C pour permettre l'insertion de la canalisation au sein du collier.

On notera avantageusement que dans cette position d'ouverture du collier permettant l'insertion de la canalisation C, la première section 2 de collier et la deuxième section 3 de collier sont toujours liées par les moyens d'articulation 4 : on évite ainsi les risques de désolidarisation entre la première section 2 de collier et la deuxième section 3 de collier, et ainsi le risque de perte lors de l'ouverture du collier 1.

Une fois la canalisation insérée, il suffit de fermer le collier, tout d'abord par pivotement inverse de la première section 2 de collier par rapport à la deuxième section de collier 3, puis par la mise en place des moyens de liaison et de serrage 5, amovible. La mise en place des moyens 5 assure la liaison entre la deuxième extrémité 22 de la première section 2 de collier et la deuxième extrémité 32 de la deuxième section 3 de collier, et le serrage du collier sur la canalisation C.

Le collier conforme à la présente divulgation trouve une application particulière comme à fonction de collier de dérivation, le corps rigide de la première section de collier 2 présentant une ouverture de passage pour une tubulure T destinée à positionner au droit d'une ouverture de piquage de la canalisation C : un joint J est maintenu contre la canalisation C assurant l'étanchéité au niveau de l'ouverture de piquage de la canalisation C, et la tubulure. Lesdits moyens de liaison et de serrage 5, sont configurés amovibles de sorte que la position de liaison PL reliant la deuxième extrémité 22 de la première section de collier 2 à la deuxième extrémité 32 de la deuxième section de collier 3 entraîne le serrage du joint J et son étanchéité sur la canalisation C, ledit joint J étant alors pincé entre la surface interne de la première section de collier 2 et la canalisation. La tubulure T du collier peut être équipé d'un robinet R, à fonction d'obturation, et comme visible aux figures.

Un tel collier peut être mise en place sur une canalisation en charge, le robinet ouvert. Un dispositif de perçage, notamment, tel qu'enseigné par exemple par FR 19 00509 peut être fixé au robinet et utilisé pour percer l'orifice de piquage sur la canalisation, au travers du robinet et de la tubulure. Le robinet est ensuite obturé après perçage. Un tel collier de dérivation trouve une application particulière pour créer une dérivation de fluide à partir de la canalisation.

De manière notable, et selon la présente divulgation, le collier 1 comprend un système de réglage de diamètre configuré pour autoriser un changement de diamètre du collier, sans séparation de la première section de collier 2 et de la deuxième section de collier 3 qui sont avantageusement toujours liées par lesdits moyens d'articulation 4.

Ainsi, le collier est avantageusement un collier multi diamètre à savoir qu'il convient pour assurer un montage de collier sur au moins de deux diamètres distinct de canalisation, tel que par exemple une canalisation, notamment en fonte, d'un diamètre DN150 (170 mm +1ou-3 en diamètre extérieure, et d'une canalisation, d'un diamètre extérieur 180mm.

A cet effet, ledit système de réglage présente ledit axe d'articulation qui comprend au moins un ergot 40, 41 de section non circulaire, ladite au moins une ouverture comprenant un couple d'ouvertures de réglage 43, 44 autorisant deux positions de réglage distinctes pour l'axe d'articulation dont ledit au moins un ergot 40 ;41 de section non circulaire est prisonnier dans l'une ou l'autre des deux ouvertures de réglage 43, 44 en position de fermeture du collier.

Par exemple, et dans la position de réglage visibles aux figures 1 et 2, le collier est fermé (mais non encore serré par les moyens de liaison et de serrage), ledit au moins ergot 40,41 de section non circulaire est positionné dans l'ouverture de réglage 43, adaptée à une canalisation de diamètre extérieur 170mm (+1 ou - 3mm). La section dudit ergot non circulaire, comprend une portion circulaire, et un plat 47. Dans la position angulaire dudit au moins ergot dans l'ouverture, ce dernier est prisonnier dans l'ouverture 43, à savoir que son orientation ne permet pas de l'extraire de cette ouverture de réglage.

Une gorge 45, de largeur inférieure au diamètre des ouvertures de réglage 43, 44 met en communication les deux ouvertures du couple d'ouvertures de réglage 43, 44, en autorisant lors de l'ouverture du collier par pivotement dudit axe d'articulation 40, 41 par rapport à l'une ou l'autre des deux ouvertures de réglage. Le pivotement dudit ergot de section non circulaire s'opère jusqu'à une position autorisant l'engagement dudit ergot de section non circulaire au travers de la gorge 45, et ainsi le changement de position de l'axe d'articulation de l'une à l'autre des deux ouvertures du couple d'ouvertures de réglage 43, 44 par coulissement de l'ergot de section non circulaire 40, 41 au travers de la gorge 45.

Ainsi et tel qu'illustré à la figure 6, le pivotement de l'ergot 40 d'environ un quart de tour permet d'orienter la section non circulaire dudit ergot dans une position permettant son insertion dans la gorge 45 : le plat est alors orienté suivant la direction de la gorge 45. La position de l'axe d'articulation peut alors être changée par coulissement dudit ergot, et jusqu'à l'autre ouverture de réglage.

Il suffit alors de pivoter la première section de collier par rapport à la deuxième section autour de l'axe d'articulation, dans le sens de fermeture, pour que ledit au moins ergot soit prisonnier de l'ouverture de réglage 44, adaptée pour un diamètre de canalisation C supérieur.

On notera avantageusement que cette opération de réglage du collier d'une position de réglage dans l'une repérée 43 des ouvertures de réglage adaptée à une canalisation de moindre diamètre jusqu'à une position de réglage dans l'autre ouverture de réglage 44 adaptée à une canalisation de plus grand diamètre est avantageusement opérée sans séparation de la première section 2 de collier et de la deuxième section 3 de collier qui restent toujours solidaires l'une de l'autre par lesdits moyens d'articulation 4. Bien entendu les opérations de réglage peuvent être opérées en sens inverse pour ajuster le collier d'un diamètre de plus grand diamètre à un collier de plus petit diamètre, toujours sans séparer les deux sections de collier 2,3. On évite ainsi les risques de perte de composants.

De manière notable, ledit axe d'articulation peut comprend deux dits ergots 40, 41, de section non circulaire, coaxiaux, orientés suivant des sens opposés, solidaires de la première extrémité 21 de la première sections de collier, ou inversement de la première extrémité 31 de la deuxième extrémité de collier, et dans lequel le système de réglage comprend, deux couples d'ouvertures de réglage 43, 44, ainsi que la gorge 45 mettant en communication les deux ouvertures de réglage 43, 44 de chaque couple d'ouvertures de réglage 43, 44.

Les ergots 40, 41 de section non circulaire sont reçus simultanément respectivement dans deux des ouvertures de réglage des deux couples d'ouverture de réglage 43, 44, adaptées pour un même diamètre de canalisation C, ou encore dans les deux gorges 45, intermédiaires entre les deux ouvertures des couples d'ouverture de réglage 43, 44.

On remarque que selon ce mode de réalisation, les dessins des deux ergots et celui des ouvertures de réglage 43, 44 et de la gorge 45 sont symétriques par rapport à un plan de symétrie passant par le plan du collier.

Selon un mode de réalisation visible à titre indicatif à la figure 5, les ergots 40, 41 sont orientés vers l'extérieur, de manière coaxiale, en saillie de la première extrémité 21 de la première section 2 de collier (ou inversement de la première extrémité 31 de la deuxième section 3 de collier selon un exemple non illustré). Les deux couples d'ouvertures 43, 44, ainsi que les deux gorges 45 sont orientés débouchantes les uns vers les autres, pratiqués respectivement sur deux branches 33 parallèles de la première extrémité 31 de la deuxième section 2 de collier (ou inversement de la première extrémité 21 de la première section 2 de collier suivant un exemple non illustré).

Selon un mode de réalisation, permettant un assemblage rapide du collier, l'une des deux ouvertures du ou de chaque couple d'ouverture de réglage 43, 44 comprend une rainure d'entrée 46, mettant en communication ladite ouverture de réglage 43 à l'extérieur en autorisant lors de l'ouverture du collier par pivotement dudit axe d'articulation 40, 41 par rapport à ladite ouverture de réglage 43; le pivotement dudit ergot 40, 41 de section non circulaire jusqu'à une position autorisant l'engagement dudit ergot de section non circulaire 40 ;41 dans la rainure d'entrée 46, et ainsi l'extraction dudit ergot de section non circulaire par coulissement de l'ergot non circulaire le long de la rainure d'entrée 46 jusqu'à l'extérieur, obtenant ainsi la séparation entre la première section 2 et la deuxième section 3.

Encore et selon la manipulation inverse cette configuration permet au contraire l'assemblage de la première section de collier 2 à la deuxième section de collier 3 par insertion dudit ergot de section non circulaire 40 ;41 dans la rainure d'entrée 46 et jusqu'à son coulissement dans l'ouverture de réglage 43. Il devient possible d'assembler très rapidement, les deux sections de collier 2, 3, sans outil.

On remarque que la rainure d'entrée 46 s'étend depuis l'ouverture 43, de préférence en étant positionnée de l'autre côté de la gorge 45. Lorsque les moyens d'articulation 4 comprennent deux ergots 40, 41 de section non circulaire, orientés en des sens opposés et deux couples d'ouverture de réglage 43, 44, ainsi que deux gorges 45, chacune intermédiaire entre les deux ouvertures 43, 44 du couple, respectivement disposés suivant le plan de symétrie du collier, il sera nécessaire de prévoir deux rainures d'entrée 46, en symétrie, et comme visible à la figure 5.

De manière notable, les moyens de liaison 5 et de serrage, peuvent, au moins selon un mode de réalisation, permettre un serrage sans outil.

Par exemple, les moyens de liaison 5 peuvent prendre la forme d'un dispositif de serrage mécanique à grenouillère. Un tel dispositif peut comprendre un levier 50 articulé suivant un premier axe de pivot A1 à la deuxième extrémité 32 de la deuxième section 3 de collier, (ou inversement à la deuxième extrémité 22 de de la première section 2 de collier selon un exemple non illustré), ainsi qu'une boucle 51, articulée audit levier 50 suivant un second axe de pivot A2 configurée pour accrocher de manière amovible au moins un crochet 52 solidaire de la deuxième extrémité 22 de la première section 2 de collier (ou inversement de la deuxième extrémité 32 de la deuxième section 3 de collier selon un exemple non illustré). On notera que les axes de pivot, à savoir premier axe de pivot A1, second axe de pivot A2, et troisième axe de pivot A3 sont de préférence sensiblement parallèles entre eux, et en particulier parallèles à l'axe d'articulation A des moyens d'articulation 4.

Selon le principe d'un serrage à grenouillère, ledit dispositif de serrage mécanique est configuré pour se bloquer lorsque le second axe de pivot A2 passe le point d'alignement entre le premier axe de pivot A1 et le troisième axe de pivot A3 et jusqu'à une mise en butée du levier 50, lorsque le levier est actionné suivant le sens de fermeture SF. Le desserrage est opéré par rotation inverse du levier suivant le sens d'ouverture SO du levier.

Selon un mode de réalisation, le levier 50 et la boucle 51 peuvent être constitués essentiellement, respectivement par deux fils métalliques conformés, ou encore par des pièces métalliques embouties.

Par exemple, et comme visible aux figures :
- le levier comprend (ou est constitué notamment essentiellement) d' un fil métallique conformé dont les deux extrémités 53 (à titre d'exemple recourbées l'une vers l'autre ou au contraire recourbées en des sens opposés) sont insérées respectivement dans deux ouvertures de la deuxième extrémité 32 de la seconde section de collier 3, ou de la première section de collier pour constituer le premier axe de pivot A1, et/ou
- la boucle 51 comprend (ou est constitué notamment essentiellement) d'un fil métallique conformé dont les deux extrémités 55 sont articulées sur le levier, par exemple recourbées l'une vers l'autre, insérées respectivement dans deux ouvertures constituées par deux œillets 54 formés par des torsades du fil métallique du levier.

Selon un autre mode de réalisation, le levier et/ou la boucle peut être formé par des pièces embouties.

Un tel dispositif de serrage peut être constitué essentiellement des deux fils métalliques conformés, au moins en ce qui concerne le levier 50 et la boucle 51. Le crochet 52 solidaire de la deuxième extrémité 22 de la première section 2 de collier (ou inversement solidaire de la deuxième extrémité 32 de la deuxième section de collier 3) peut être obtenu lors du moulage de la première section 2(ou de la deuxième section). Eventuellement, il peut être prévu plusieurs crochets (à savoir deux ou plus), en différentes position sur la section du collier, afin de permettre un réglage de diamètre du collier, et selon un mode de réalisation non illustré.

Selon un mode de réalisation, ledit au moins ergot 40, 41 d'une part, et ledit couple d'ouvertures de réglage 43,44 et la gorge 45, d'autre part, sont réalisés respectivement d'un seul tenant avec le corps rigide 20 de la première section 2 de collier, et d'un seul tenant avec le corps rigide 30 de la deuxième section 3 de collier. En particulier le corps rigide 20 de la première section 2 de collier, est une pièce de fonderie, et le corps rigide 30 de la deuxième section 3 de collier, est une pièce de fonderie, et dans lequel ledit ergot 40,41, et/ou le couple d'ouverture de réglage 43,44 ainsi que la gorge 45, voire encore ledit au moins crochet 52, sont obtenus lors du moulage des pièces de fonderie. Alternativement, ces pièces peuvent être en plastique. Le corps rigide 20 de la première section 2 de collier, peut être une pièce moulée notamment par injection, et le corps rigide 30 de la deuxième section 3 de collier, peut être une pièce moulée notamment par injection : ledit ergot 40,41, et/ou le couple d'ouverture de réglage 43,44 ainsi que la gorge 45, voire encore ledit au moins crochet 52, sont obtenus de préférence lors du moulage des pièces plastiques.

### Application industrielle

Les présentes solutions techniques peuvent trouver à s'appliquer dans le domaine de l'adduction d'eau, et trouve une application particulière comme collier de dérivation.

Le serrage permis via le dispositif de serrage à grenouillère est avantageux, notamment de par la rapidité d'exécution du serrage, et en ce qu'il peut ne pas nécessiter d'outil pour sa mise en œuvre, ni de dissocier de composants pour sa mise en œuvre.

On notera que le réglage de longueur s'opère avantageusement sans dissociation des composants du collier (à savoir la première section de collier 2, la deuxième section de collier 3, moyens d'articulation 4 et les moyens de liaison 5, qui forment toujours un ensemble lié), évitant les risques de pertes.

### Liste des signes de référence

- 1 : Collier pour canalisation,
- 2 : Première section de collier
- 20 : Corps rigide,
- 21 : Première extrémité,
- 22 : Deuxième extrémité,
- 3 : Deuxième section de collier
- 30 : Corps rigide,
- 31 : Première extrémité
- 32 : Deuxième extrémité,
- 33. Branches parallèles
- 4 : Moyens d'articulation,
- 40,41 : Ergots de section non circulaire
- 43,44 : Ouvertures de réglage du couple d'ouverture de réglage
- 45 : Gorge (intermédiaire entre les deux ouvertures de réglage du couple),
- 46 : Rainure d'entrée,
- 47 : Plat
- 5 : Moyens de liaison et de serrage, amovible,
- 50 :Levier (dispositif de serrage mécanique du type grenouillère),
- 51 : Boucle (dispositif de serrage mécanique du type grenouillère),
- 52 : Crochet (dispositif de serrage mécanique du type grenouillère)
- 53 :Extrémités recourbées fil métallique du levier
- A1 : Axe de pivot entre le levier et la deuxième extrémité de la deuxième section de collier,
- A2 : Axe de pivot entre le levier et la boucle,
- A3 : Axe de pivot entre la boucle et le crochet
- C : Canalisation
- PL : Position de liaison (Moyen de liaison et de serrage)
- PE : Position Escamotée (Moyen de liaison et de serrage)
- SF : Sens de fermeture du levier 50,
- SO : Sens d'ouverture du levier 50.

## Revendications

1. Collier (1) pour canalisation, comprenant :
- une première section de collier (2) comprenant un corps rigide (20), s'étendant suivant une portion de cercle destiné à prendre appui sur une première portion de la périphérie d'une canalisation (C), ladite première section de collier (2) comprenant une première extrémité (21) et une deuxième extrémité (22),
- une deuxième section de collier (3), comprenant un corps rigide (30), s'étendant suivant une portion de cercle destiné à prendre appui sur une deuxième portion de la périphérie de ladite canalisation (C), diamétralement opposée à ladite première portion, ladite deuxième section de collier (3) comprenant une première extrémité (31) et une deuxième extrémité (32),
- des moyens d'articulation (4) reliant la première extrémité (21) de la première section de collier (2) et la première extrémité (31) de la deuxième section de collier (3) comprenant un axe d'articulation (A) monté pivotant dans au moins une ouverture, ledit axe d'articulation étant solidaire de la première extrémité de la première section de collier (2) et ladite au moins une ouverture solidaire de la première extrémité de la deuxième section de collier, ou inversement ledit axe d'articulation étant solidaire de la première extrémité de la deuxième section de collier et ladite au moins une ouverture solidaire de la première extrémité de la première section de collier,
- des moyens de liaison et de serrage (5), configurés amovibles de sorte à permettre de passer d'une position escamotée (PE) jusqu'à une position de liaison (PL) reliant la deuxième extrémité (22) de la première section de collier (3) à la deuxième extrémité (32) de la deuxième section de collier (3) pour assurer le serrage du collier sur la canalisation, ladite position escamotée (PE) assurant l'ouverture du collier par écartement de la première section de collier (2) et de la deuxième section de collier en liaison par lesdits moyens d'articulation (4), puis, l'insertion d'une canalisation (C) par un dégagement du collier laissé par l'escamotage desdits moyens de liaison (5), amovible et l'écartement de la première section de collier (2) et de la deuxième section de collier (3) par le pivotement des moyens d'articulation (4),
et dans lequel le collier comprend un système de réglage de diamètre configuré pour autoriser un changement de diamètre du collier, sans séparation de la première section de collier (2) et de la deuxième section de collier (3) toujours liées par lesdits moyens d'articulation (4), ledit système de réglage comprenant ledit axe d'articulation (A) qui comprend au moins un ergot (40, 41) de section non circulaire, ladite au moins une ouverture comprenant un couple d'ouvertures de réglage (43, 44) autorisant deux positions de réglage distinctes pour l'axe d'articulation dont ledit ergot (40; 41) de section non circulaire est prisonnier dans l'une ou l'autre des deux ouvertures de réglage (43, 44) en position de fermeture du collier, et dans lequel une gorge (45), de largeur inférieure au diamètre des ouvertures de réglage (43,44) met en communication les deux ouvertures du couple d'ouverture de réglage (43,44), en autorisant lors de l'ouverture du collier par pivotement dudit axe d'articulation (40, 41) par rapport à l'une ou l'autre des deux ouvertures de réglage; le pivotement dudit ergot de section non circulaire jusqu'à une position autorisant l'engagement dudit ergot de section non circulaire au travers de la gorge (45), et ainsi le changement de position de l'axe d'articulation de l'une à l'autre des deux ouvertures du couple d'ouvertures de réglage (43,44) par coulissement dudit au moins un ergot de section non circulaire (40,41) au travers de la gorge (45).

2. Collier selon la revendication 1, dans lequel, ledit axe d'articulation comprend deux dits ergots (40,41), coaxiaux, orientés suivant des sens opposés, solidaires de la première extrémité (21) de la première section de collier; ou inversement de la première extrémité (31) de la deuxième extrémité de collier, et dans lequel le système de réglage de diamètre configuré pour autoriser un changement de diamètre du collier comprend, deux couples d'ouvertures de réglage (43,44) , ainsi que la gorge (45) mettant en communication les deux ouvertures de réglage (43,44) de chaque couple, les ergots (40,41) étant reçus simultanément respectivement dans deux des ouvertures de réglage des deux couples d'ouverture de réglage (43,44), ou encore dans les deux gorges (45), intermédiaires entre les deux ouverture des couples d'ouverture de réglage (43,44).

3. Collier selon la revendication 2, dans lequel les ergots (40,41) sont orientés vers l'extérieur, de manière coaxiale, en saillie de la première extrémité (21) de la première section (2) de collier, ou inversement de la première extrémité (31) de la deuxième section (3) de collier, et dans lequel les deux couples d'ouvertures, ainsi que les deux gorges sont orientés débouchantes, les unes vers les autres, pratiqués respectivement sur deux branches (33) parallèles de la première extrémité (31) de la deuxième section (3) de collier, ou inversement sur deux branches de la première extrémité (21) de la première section (2) de collier.

4. Collier selon l'une des revendications 1 à 3, dans lequel l'une des deux ouvertures du ou de chaque couple d'ouvertures de réglage (43,44) comprend une rainure d'entrée (46), mettant en communication ladite ouverture de réglage (43) à l'extérieur en autorisant lors de l'ouverture du collier par pivotement dudit axe d'articulation (40, 41) par rapport à ladite ouverture de réglage (43), le pivotement dudit ergot de section non circulaire jusqu'à une position autorisant l'engagement dudit ergot de section non circulaire dans la rainure d'entrée (46), et ainsi l'extraction dudit ergot de section non circulaire par coulissement de l'ergot de section non circulaire le long de la rainure d'entrée (46) jusqu'à l'extérieur, jusqu'à obtenir la séparation entre la première section (2) et la deuxième section (3), ou au contraire permettre l'assemblage de la première section de collier (2) à la deuxième section de collier (3) par insertion dudit ergot de section non circulaire (40,41) dans la rainure d'entrée (46) et jusqu'à son insertion dans l'ouverture de réglage (43).

5. Collier selon l'une des revendications 1 à 4 dans lequel les moyens de liaison (5), comprennent un dispositif de serrage mécanique à grenouillère comprenant un levier (50) articulé suivant un premier axe de pivot (A1) à la deuxième extrémité (32) de la deuxième section (3) de collier, ou inversement à la deuxième extrémité (22) de la première section (2) de collier, ainsi qu'une boucle (51), articulée audit levier (50) suivant un second axe de pivot (A2) configurée pour accrocher de manière amovible un crochet (52) solidaire de la deuxième extrémité (22) de la première section (2) de collier, ou inversement de la deuxième extrémité (32) de la deuxième section (3) de collier, et dans lequel ledit dispositif de serrage mécanique est configuré pour se bloquer lorsque le second axe de pivot (A2) passe le point d'alignement entre le premier axe de pivot (A1) et le troisième axe de pivot (A3), et jusqu'à la mise une mise en butée du levier (50).

6. Collier selon la revendication 5, dans lequel le levier (50) et la boucle (51) sont constitués essentiellement, respectivement par deux fils métalliques conformés, ou encore par des pièces métalliques embouties.

7. Collier selon la revendication 6, dans lequel :
- le levier comprend un fil métallique conformé dont les deux extrémités (53), sont insérées respectivement dans deux ouvertures de la deuxième extrémité (32) de la seconde section de collier (3), ou de la première section de collier pour constituer le premier axe de pivot (A1), et/ou
- la boucle (51) comprend un fil métallique conformé dont les deux extrémités (55) sont articulés sur le levier.

8. Collier selon l'une des revendications 1 à 7, à fonction de collier de dérivation, dans lequel le corps rigide de la première section de collier (2) présente une ouverture de passage pour une tubulure (T) destinée à positionner au droit d'une ouverture de piquage de la canalisation, un joint (J) maintenu contre la canalisation (C) assurant l'étanchéité au niveau de l'ouverture de piquage, lesdits moyens de liaison (5) et de serrage, amovibles étant configurés de sorte dans que la position de liaison (PL) reliant la deuxième extrémité (22) de la première section de collier (2) à la deuxième extrémité (32) de la deuxième section de collier (3) entraîne le serrage du joint (J) et son étanchéité sur la canalisation (C).

9. Collier selon l'une des revendications 1 à 8, dans lequel ledit au moins ergot (40,41) d'une part, et ledit couple d'ouvertures de réglage (43,44) et la gorge (45), d'autre part, sont réalisés respectivement d'un seul tenant avec le corps rigide (20) de la première section (2) de collier, et d'un seul tenant avec le corps rigide (30) de la deuxième section (3) de collier.

10. Collier selon la revendication 9, dans lequel le corps rigide (20) de la première section (2) de collier, est une pièce de fonderie ou un pièce plastique moulée, et le corps rigide (30) de la deuxième section (3) de collier, est une pièce de fonderie ou une pièce plastique moulée, et dans lequel ledit au moins un ergot (40,41), et/ou le couple d'ouverture de réglage (43,44) ainsi la gorge (45), sont obtenus lors du moulage des pièces de fonderie ou encore lors du moulage des pièces plastiques.

## Patentansprüche

1. Schelle (1) für ein Rohr, umfassend:
- eine erste Sektion (2) der Schelle (1), umfassend einen starren Körper (20), welcher sich entlang eines Kreisabschnitts erstreckt, der dazu bestimmt ist, an einem ersten Abschnitt des Umfangs eines Rohrs (C) anzuliegen, wobei die genannte erste Sektion (2) der Schelle (1) ein erstes Ende (21) und ein zweites Ende (22) umfasst,
- eine zweite Sektion (3) der Schelle (1), umfassend einen starren Körper (30), welcher sich entlang eines Kreisabschnitts erstreckt, der dazu bestimmt ist, an einem zweiten Abschnitt des Umfangs des genannten Rohrs (C) anzuliegen, diametral gegenüber dem genannten ersten Abschnitt, wobei die genannte zweite Sektion (3) der Schelle (1) ein erstes Ende (31) und ein zweites Ende (32) umfasst,
- Gelenkmittel (4), die das erste Ende (21) der ersten Sektion (2) der Schelle (1) und das erste Ende (31) der zweiten Sektion (3) der Schelle (1) verbinden, umfassend eine Gelenkachse (A), die schwenkbar in mindestens einer Öffnung montiert ist, wobei die genannte Gelenkachse (A) mit dem ersten Ende (21) der zweiten Sektion (2) der Schelle (1) fest verbunden ist und die genannte mindestens eine Öffnung mit dem ersten Ende (31) der zweiten Sektion (3) der Schelle (1) fest verbunden ist, oder andererseits die genannte Gelenkachse (A) mit dem ersten Ende (31) der zweiten Sektion (3) der Schelle (1) fest verbunden ist und die genannte mindestens eine Öffnung mit dem ersten Ende (21) der ersten Sektion (2) der Schelle (1) fest verbunden ist,
- Verbindungs- und Klemmmittel (5), die lösbar derart ausgelegt sind, dass sie ein Übergehen von einer Versenkposition (PE) bis zu einer Verbindungsposition (PL) gestatten, die das zweite Ende (22) der ersten Sektion (2) der Schelle (1) mit dem zweiten Ende (32) der zweiten Sektion (3) der Schelle (1) verbindet, um das Festklemmen der Schelle (1) auf dem Rohr (C) sicherzustellen, wobei die genannte Versenkposition (PE) das Öffnen der Schelle (1) durch Beabstanden der ersten Sektion (2) der Schelle (1) und der zweiten Sektion (3) der Schelle (1) in Verbindung mit den genannten Gelenkmitteln (4) sicherstellt, dann das lösbare Einsetzen eines Rohrs (C) durch Freigeben der Schelle (1), das durch das Versenken der genannten Verbindungsmittel (5) bewirkt wird, und das Beabstanden der ersten Sektion (2) der Schelle (1) und der zweiten Sektion (3) der Schelle (1) durch das Verschwenken der Gelenkmittel (4),
und wobei die Schelle (1) ein System zum Einstellen des Durchmessers umfasst, das dafür ausgelegt ist, um eine Änderung des Durchmessers der Schelle (1) zuzulassen, ohne Trennung der ersten Sektion (2) der Schelle (1) und der zweiten Sektion (3) der Schelle (1), die weiterhin durch die genannten Gelenkmittel (4) verbunden sind, wobei das genannte Einstellsystem die genannte Gelenkachse (A) umfasst, die mindestens einen Vorsprung (40, 41) mit nicht-kreisförmigem Querschnitt umfasst, wobei die genannte mindestens eine Öffnung ein Paar von Einstellöffnungen (43, 44) umfasst, die zwei verschiedene Einstellpositionen für die Gelenkachse (A) zulassen, wobei der genannte Vorsprung (40; 41) mit nicht-kreisförmigem Querschnitt in der einen oder anderen der beiden Einstellöffnungen (43, 44) in der Schließposition der Schelle (1) aufgenommen ist, und wobei ein Hals (45) mit einer kleineren Breite als der Durchmesser der Einstellöffnungen (43, 44) die beiden Öffnungen des Paars von Einstellöffnungen (43, 44) in Kommunikation versetzt, indem beim Öffnen der Schelle (1) durch Verschwenken der genannten Gelenkachse (A) in Bezug auf die eine oder die andere der beiden Einstellöffnungen (43, 44) zugelassen werden das Verschwenken des genannten Vorsprungs (40; 41) mit nicht-kreisförmigem Querschnitt bis zu einer Position, die das Eingreifen des genannten Vorsprungs (40; 41) mit nicht-kreisförmigem Querschnitt durch den Hals (45), und somit das Ändern der Position der Gelenkachse (A) von der einen zu der anderen der beiden Öffnungen des Paars von Einstellöffnungen (43, 44) durch Gleiten des genannten mindestens einen Vorsprungs (40, 41) mit nicht-kreisförmigem Querschnitt quer durch den Hals (45).

2. Schelle (a) nach Anspruch 1, wobei die genannte Gelenkachse (A) zwei sogenannte Vorsprünge (40, 41) umfasst, koaxial, in entgegengesetzten Richtungen ausgerichtet, fest verbunden mit dem ersten Ende (21) der ersten Sektion der Schelle (1); oder andererseits mit dem ersten Ende (31) des zweiten Endes der Schelle (1), und wobei das System zum Einstellen des Durchmessers, das dafür ausgelegt ist, um eine Änderung des Durchmessers der Schelle (1) zuzulassen, zwei Paare von Einstellöffnungen (43, 44) sowie den Hals (45) umfasst, der die beiden Einstellöffnungen (43, 44) jedes Paars in Kommunikation versetzt, wobei die Vorsprünge (40, 41) gleichzeitig jeweils in zwei Einstellöffnungen (43, 44) der der beiden Paare von Einstellöffnungen (43, 44) aufgenommen werden, oder auch in den beiden Hälsen (45), die zwischen den beiden Öffnungen der Paare von Einstellöffnungen (43, 44) angeordnet sind.

3. Schelle (1) nach Anspruch 2, wobei die Vorsprünge (40, 41) nach außen koaxial vorspringend von dem ersten Ende (21) der ersten Sektion (2) der Schelle (1) ausgerichtet sind, oder andererseits von dem ersten Ende (31) der zweiten Sektion (3) der Schelle (1), und wobei die beiden Paare von Öffnungen sowie die beiden Hälse (45) ineinander einmündend ausgerichtet sind, die jeweils auf zwei Zweigen (33) parallel zu dem ersten Ende (31) der zweiten Sektion (3) der Schelle (1) ausgeführt sind, oder andererseits auf zwei Zweigen des ersten Endes (21) der ersten Sektion (2) der Schelle (1).

4. Schelle (1) nach einem der Ansprüche 1 bis 3, wobei eine der beiden Öffnungen des oder jedes Paars von Einstellöffnungen (43, 44) eine Einführnut (46) umfasst, welche die genannte Einstellöffnung (43) mit der Außenseite in Kommunikation versetzt, indem beim Öffnen der Schelle (1) durch Verschwenken der genannten Gelenkachse (A) in Bezug auf die genannte Einstellöffnung (43) zugelassen werden das Verschwenken des genannten Vorsprungs (40, 41) mit nicht-kreisförmigem Querschnitt bis zu einer Position, die das Eingreifen des genannten Vorsprungs (40, 41) mit nicht-kreisförmigem Querschnitt in die Einführnut (46) und somit das Herausziehen des genannten Vorsprungs (40, 41) mit nicht-kreisförmigem Querschnitt durch Gleiten des Vorsprungs (40, 41) mit nicht-kreisförmigem Querschnitt entlang der Einführnut (46) bis zur Außenseite zulässt, bis eine Trennung zwischen der ersten Sektion (2) und der zweiten Sektion (3) erhalten wird, oder im Gegensatz dazu das Zusammenfügen der ersten Sektion (2) der Schelle (1) mit der zweiten Sektion (3) der Schelle (1) durch Einsetzen des genannten Vorsprungs (40, 41) mit nicht-kreisförmigem Querschnitt in die Einführnut (46) und bis zu seinem Einsetzen in die Einstellöffnung (43) gestattet wird.

5. Schelle (1) nach einem der Ansprüche 1 bis 4, wobei die Verbindungsmittel (5) eine Vorrichtung zum mechanischen Festklemmen mit einem Greifer umfassen, umfassend einen Hebel (50), der gemäß einer ersten Schwenkachse (A1) mit dem zweiten Ende (32) der zweiten Sektion (3) der Schelle (1) gelenkverbunden ist, oder andererseits mit dem zweiten Ende (22) der ersten Sektion (2) der Schelle(1), sowie eine Öse (51), die mit dem genannten Hebel (50) gemäß einer zweiten Schwenkachse (A2) gelenkverbunden ist, und die dafür ausgelegt ist, um auf lösbare Weise einen Haken (52) zu befestigen, der mit dem zweiten Ende (22) der ersten Sektion (2) der Schelle (1) fest verbunden ist, oder andererseits mit dem zweiten Ende (32) der zweiten Sektion (3) der Schelle (1), und wobei die genannte Vorrichtung zum mechanischen Festklemmen dafür ausgelegt ist, um sich zu blockieren, wenn die zweite Schwenkachse (A2) den Ausrichtungspunkt zwischen der ersten Schwenkachse (A1) und der dritten Schwenkachse (A3) passiert, bis der Hebel (50) in Anlage gebracht wird.

6. Schelle nach Anspruch 5, wobei der Hebel (50) und die Öse (51) im Wesentlichen jeweils aus zwei geformten Metalldrähten bestehen, oder auch aus Metallstanzteilen.

7. Schelle nach Anspruch 6, wobei:
- der Hebel (50) einen geformten Metalldraht umfasst, dessen beide Enden (53) jeweils in zwei Öffnungen des zweiten Endes (32) der zweiten Sektion (3) der Schelle (1) oder der ersten Sektion (2) der Schelle (1) eingesetzt sind, um die erste Schwenkachse (A1) zu bilden, und/oder
- die Öse (51) einen geformten Metalldraht umfasst, dessen beide Enden (55) mit dem Hebel (50) gelenkverbunden sind.

8. Schelle (1) nach einem der Ansprüche 1 bis 7, mit einer Funktion einer Abzweigschelle, wobei der starre Körper der ersten Sektion (2) der Schelle (1) eine Durchgangsöffnung für eine Rohrleitung (T) aufweist, die dazu bestimmt ist, eine Stutzenöffnung des Rohrs gerade zu positionieren, wobei eine Dichtung (J) gegen das Rohr (C) gehalten wird, welche die Dichtheit auf der Höhe der Stutzenöffnung sicherstellt, wobei die genannten lösbaren Verbindungs- und Klemmmittel (5) derart ausgelegt sind, dass die Verbindungsposition (PL), die das zweite Ende (22) der ersten Sektion (2) der Schelle (1) mit dem zweiten Ende (32) der zweiten Sektion (3) der Schelle (1) verbindet, das Festklemmen der Dichtung (J) und ihre Dichtheit an dem Rohr (C) mit sich bringt.

9. Schelle (1) nach einem der Ansprüche 1 bis 8, wobei der genannte mindestens eine Vorsprung (40, 41) einerseits und das genannte Paar von Einstellöffnungen (43, 44) und der Hals (45) andererseits jeweils aus einem Stück mit dem starren Körper (20) der ersten Sektion (2) der Schelle bestehen, und aus einem Stück mit dem starren Körper (30) der zweiten Sektion (3) der Schelle (1).

10. Schelle (1) nach Anspruch 9, wobei der starre Körper (20) der ersten Sektion (2) der Schelle (1) ein Gussteil oder ein geformter Kunststoffteil ist, und der starre Körper (30) der zweiten Sektion (3) der Schelle (1) ein Gussteil oder ein geformter Kunststoffteil ist, und wobei der genannte mindestens eine Vorsprung (40, 41) und/oder das Paar von Einstellöffnungen (43, 44) sowie der Hals (45) durch das Formen von Gussteilen oder auch durch das Formen von Kunststoffteilen erhalten werden.

## Claims

1. A clamp (1) for a pipe, comprising:
- a first clamp section (2) comprising a rigid body (20), extending along a portion of a circle for bearing on a first portion of the periphery of a pipe (C), said first clamp section (2) comprising a first end (21) and a second end (22),
- a second clamp section (3), comprising a rigid body (30), extending along a portion of a circle for bearing on a second portion of the periphery of said pipe (C), diametrically opposite to said first portion, said second clamp section (3) comprising a first end (31) and a second end (32),
- hinging means (4) connecting the first end (21) of the first clamp section (2) and the first end (31) of the second clamp section (3) comprising a hinge pin (A) pivotably mounted in at least one opening, said hinge pin being integral with the first end of the first clamp section (2) and said at least one opening integral with the first end of the second clamp section, or reversely said hinge pin being integral with the first end of the second clamp section and said at least one opening integral with the first end of the first clamp section,
- connecting and clamping means (5), removably configured so as to enable transition from a stowed position (PE) to a connecting position (PL) connecting the second end (22) of the first clamp section (3) to the second end (32) of the second clamp section (3) to ensure clamping of the clamp to the pipe, said stowed position (PE) ensuring the opening of the clamp by spacing apart the first clamp section (2) from the second clamp section in connection with said hinging means (4), and then removably inserting a pipe (C) through a clearance of the clamp left by stowing said removable connecting means (5), and spacing apart the first clamp section (2) from the second clamp section (3) by pivoting the hinging means (4),
and wherein the clamp comprises a diameter adjustment system configured to allow change in diameter of the clamp, without separating the first clamp section (2) from the second clamp section (3) still connected through said hinging means (4), said adjustment system comprising said hinge pin (A) which comprises at least one lug (40, 41) with a non-circular section, said at least one opening comprising a pair of adjustment openings (43, 44) allowing two distinct adjustment positions for the hinge pin of which said lug (40; 41) with a non-circular section is held captive in either or the two adjustment openings (43, 44) in a closing position of the clamp, and wherein a throat (45), with a width less than the diameter of the adjustment openings (43, 44) communicates the two openings of the pair of adjustment openings (43, 44) with each other, by allowing upon opening the clamp by pivoting said hinge pin (40, 41) relative to either of the two adjustment openings; pivoting said lug with a non-circular section to a position allowing engagement of said lug with a non-circular section through the throat (45), and thus the change in position of the hinge pin from one to the other of the two openings of the pair of adjustment openings (43 ,44) by sliding said at least one lug (40, 41) with a non-circular section through the throat (45).

2. The clamp according to claim 1, wherein, said hinge pin comprises two said lugs (40, 41), coaxial, oriented along opposite directions, integral with the first end (21) of the first clamp section; or reversely with the first end (31) of the second clamp end, and wherein the diameter adjustment system configured to allow change in diameter of the clamp comprises, two pairs of adjustment openings (43, 44), as well as the throat (45) communicating the two adjustment openings (43, 44) of each pair with each other, the lugs (40, 41) being simultaneously received in two of the adjustment openings of the two pairs of adjustment openings (43, 44) respectively, or even into the two throats (45), intermediate between the two openings of the pairs of adjustment openings (43, 44).

3. The clamp according to claim 2, wherein the lugs (40, 41) are oriented outwardly, coaxially, projecting from the first end (21) of the first clamp section (2), or reversely from the first end (31) of the second clamp section (3), and wherein the two pairs of openings, as well as the two throats are oriented open, one towards the other, respectively provided on two parallel branches (33) of the first end (31) of the second clamp section (3), or reversely on two branches of the first end (21) of the first clamp section (2).

4. The clamp according to one of claims 1 to 3, wherein one of the two openings of the or each pair of adjustment openings (43, 44) comprises an inlet groove (46), communicating said adjustment opening (43) to the outside by allowing upon opening the clamp by pivoting said hinge pin (40, 41) relative to said adjustment opening (43), pivoting of said lug with a non-circular section up to a position allowing engagement of said lug with non-circular section into the inlet groove (46), and thus extraction of said lug with a non-circular section by sliding the lug with a non-circular section along the inlet groove (46) to the outside, until separation between the first section (2) and the second section (3) is achieved, or on the contrary to enable assembly of the first clamp section (2) with the second clamp section (3) by inserting said lug (40, 41) with a non-circular section into the inlet groove (46) and until it is inserted into the adjustment opening (43).

5. The clamp according to one of claims 1 to 4, wherein the connecting means (5) comprise a toggle mechanical clamping device comprising a lever (50) hinged along a first pivot pin (A1) to the second end (32) of the second clamp section (3), or reversely to the second end (22) of the first clamp section (2), as well as a buckle (51), hinged to said lever (50) along a second pivot pin (A2) configured to removably fasten a hook (52) integral with the second end (22) of the first clamp section (2), or reversely with the second end (32) of the second clamp section (3), and wherein said mechanical clamping device is configured to be locked when the second pivot pin (A2) passes the alignment point between the first pivot pin (A1) and the third pivot pin (A3), and until the abutment of the lever (50).

6. The clamp according to claim 5, wherein the lever (50) and the buckle (51) essentially consist, respectively, of two shaped metal wires, or even of deep-drawn metal parts.

7. The clamp according to claim 6, wherein:
- the lever comprises a shaped metal wire the two ends (53) of which are respectively inserted into two openings of the second end (32) of the second clamp section (3), or of the first clamp section to make up the first pivot pin (A1); and/or
- the buckle (51) comprises a shaped metal wire the two ends (55) of which are hinged to the lever.

8. The clamp according to one of claims 1 to 7, having the function of bypass clamp, wherein the rigid body of the first clamp section (2) has an opening for passing a tubing (T) for positioning in line with an opening for tapping the pipe, a joint (J) held against the pipe (C) ensuring sealing at the tapping opening, said removable connecting and clamping means (5) being configured so that the connecting position (PL) connecting the second end (22) of the first clamp section (2) to the second end (32) of the second clamp section (3) results in the joint (J) being clamped and sealed to the pipe (C).

9. The clamp according to one of claims 1 to 8, wherein said at least one lug (40, 41) on the one hand, and said pair of adjustment openings (43, 44) and the throat (45), on the other hand, are respectively made as one piece with the rigid body (20) of the first clamp section (2), and as one piece with the rigid body (30) of the second clamp section (3).

10. The clamp according to claim 9, wherein the rigid body (20) of the first clamp section (2) is a moulded casting or plastic part, and the rigid body (30) of the second clamp section (3) is a moulded casting or plastic part, and wherein said at least one lug (40, 41), and/or the pair of adjustment openings (43, 44) as well as the throat (45), are obtained upon moulding the castings or upon moulding the plastic parts.
